# EUROPEAN PATENT APPLICATION

(11) **EP 1 946 635 A1**
(43) Date of publication of application: **23.07.2008**
(21) Application number: 07120916.7
(22) Date of filing: 16.11.2007
(51) Int. Cl.: A01K 39/01

(54) **Feeding system for chickens**

(30) Priority: 17.11.2006 NL 1032898; 27.07.2007 NL 2000788
(71) Applicant: Van de Ven Beheer B.V., 5521 DZ Eersel (NL)
(72) Inventor: Aendekerk, John Theodorus Petronella, 6003 NJ, Weert (NL)
(74) Representative: Verhees, Godefridus Josephus Maria

(57) **Abstract**

A feed system 1 has a feed gutter 3 with a movable conveyor chain therein for the transport of feed through the feed gutter. The feed gutter 3 has a bottom and two sidewalls 3b and is open at the top. There are openings 7 in the sidewalls 3b.

The feed system 1 also has a height adjustable perch 13, which can be moved between a lowest position, in which the perch 13 is level with the upper edge of the sidewalls 3b of the feed gutter 3, and a highest position, in which the perch 13 is present at a distance above the upper edge.

The perch 13 is suspended on two turnable U-shaped braces 15 present at a distance from each other, the ends 15a of which have a swivel connection to the feed gutter. Supporting rods 15c extend between the legs of the brace 15 formed by connecting rods 15b on which the perch 13 has a hinged suspension via a suspending brace 19.

## Description

### BACKGROUND OF THE INVENTION:

### Field of the invention

The invention relates to a feed system for use in a chicken breeding run, comprising a feed gutter with a movable conveyor chain therein for the transport of feed through the feed gutter, which feed gutter has a bottom and two sidewalls and a top that is mainly open, which feed system also comprises a perch, which is present at a distance above the bottom of the feed gutter, and a moving device that is connected to the perch in order to move the perch between a lowest position that is virtually level with the upper edge of the sidewalls of the feed gutter and a highest position at a distance above the upper edge of the sidewalls.

In a breeding run of a free-range system for chickens, the chickens are free to walk around and do not sit in battery cages. Free-range systems in this report are also taken to mean aviaries. One end of the feed gutter is positioned under a feed silo. The bottom of the feed silo is opened to feed the chickens, so that feed runs into the feed gutter, and the conveyor chain is set into motion so that the feed is distributed in the feed gutter.

The height adjustable perch serves to prevent the chickens from standing in the feed gutter in order to get at the feed. In the lowest position the distance between the sidewalls and the perch is so small that the chickens cannot get in between. In the highest position large chickens can get between the sidewalls and the perch with their heads and sit on the perch. The perch can be moved automatically by the presence of a movement device.

### Prior art

Such as feed system is known from DE 20 2006 007 076 U1. Because the hens in animal-friendly free-range runs, where they can run around freely, also eat out of feed gutters, it is desirable for them to become used to this at the chicken stage so that there are no adjustment problems.

The disadvantage of this known feed system is that very young chickens, from one to several days old, when standing next to the feed gutter or sitting on the perch, cannot get to the feed in the feed gutter. For this reason very young chickens are fed manually at the beginning by placing paper on the grating bottoms and sprinkling feed thereon. This is labour intensive and really does not fit in with an automatic feed system.

### Summary of the invention

An objective of the invention is to provide a feed system of the sort described in the preamble in which the chickens, even when they are very small, can be fed automatically. For this purpose, the feed system according to the invention is characterised in that there are openings in the sidewalls of the feed gutter. In the beginning, when the chickens are very young, the feed level in the feed gutter is set to above the bottom of the holes. Feed thus flows outside on to the paper via the holes. The young chickens are thus attracted to the feed gutter from the early beginnings as this means the feed comes to lie directly next to the feed gutter. The shape of the holes depends on the sort of feed used.

The feed system also preferably has further openings provided with slides, which can be slid along the sidewalls between an open position, in which the further openings coincide with the openings in the sidewalls of the feed gutter, and a closed position, in which the further openings are found next to the openings in the sidewalls.

Note that a feed gutter provided with closable openings in the sidewall is known from CA-A-879458. However, such a gutter is only used in chicken coops where the chickens are housed in cages and the feed gutter extends along the outside of the cages. This allows the chickens to get to the feed via the openings when they are small. The size of the openings is thus here made so that the chickens cannot get through the openings in the gutter. Once the chickens are bigger, the poultry farmer closes the openings after which the chickens can only get to the feed in the gutter via the top. In the feed system according to the invention the chickens themselves determine if they get to the feed via the openings or the top.

However, this is also not the correct solution for very young chickens. These very young chickens cannot find the feed in the gutter and would therefore still have to be fed manually at the very beginning.

The chickens can be fed automatically during the whole breeding period by allowing the feed to flow outwards via the openings in the sidewalls at the beginning. This in contrary to known feed systems in free-range runs, where the poultry farmer has to feed the chickens manually in the initial phase of the breeding period. In the feed system according to the invention the chickens are standing transversely to the lengthwise direction of the feed gutter when eating and therefore eat through the holes and they can also stand on the perch to get at the feed from the top. In the known feed gutter for free-range chickens, the chickens stand in the gutter in its lengthwise direction. This means that in the feed system according to the invention more chickens are present per metre of feed gutter than in the known feed system.

An embodiment of the feed system according to the invention is characterised in that the feed system comprises a control unit that drives the moving device and adjusts the height of the perch, so that the chickens cannot get through the sidewalls of the feed gutter and the perch and stand in the feed gutter throughout the whole breeding period. The perch height is adjusted during the whole breeding period so that the chickens cannot stand in the gutter. This provides three advantages compared with the known feed system, namely no chickens are lifted along in the gutter, there is no chance of taking a dust bath and there is no contamination of the feed by droppings. As the chickens cannot get into the gutter, they also cannot be lifted along on the movable conveyor chain. In the known feed system problems develop because the chickens are lifted in the gutter and can get stuck in the bend, drive or hopper of the feed system. Weak, sick chickens and contaminants such as breeding paper are removed from the gutter in the known feed system by what is known as a chicken remover. In practice a chicken remover does not work satisfactorily and there are still problems with heaping up of feed as chickens or contamination get stuck in various places in the feed gutter. As the chickens cannot take a dust bath (natural behaviour) feed can also not be spilt. Moreover, as the chickens cannot get into the gutter, the feed in the gutter will not be contaminated with droppings. Contamination of the feed with droppings makes the feed unpalatable and therefore limits the food uptake of the chickens.

A further embodiment of the feed system according to the invention is characterised in that the perch is suspended on two height adjustable supporting rods, which are transverse to the perch and parallel to the bottom of the feed gutter at a distance from each other, and which are part of the moving device.

A still further embodiment of the feed system is characterised in that the supporting rods are connected to connecting rods, an end of which has a swivel connection to the feed gutter, which are part of the moving devices.

Again a further embodiment of the feed system is characterised in that the connecting rods have a swivel connection to connecting pieces that can be connected to the feed gutter and can connect two feed gutters together. The connecting rods are preferably part of U-shaped braces. The perch also preferably has a hinged suspension to the supporting rods and the supporting rods are rigidly connected to the connecting rods.

### Brief description of the drawings

The invention will be elucidated more fully below on the basis of drawings in which embodiments of the feed system according to the invention are shown. In these drawings:
Figure 1 shows a transverse elevation of an embodiment of the feed system according to the invention with the perch in the lowest position;
Figure 2 shows a part of the feed system shown in figure 1 in perspective with the perch in the lowest position;
Figure 3 shows a transverse elevation of the feed system shown in figure 1 with the perch in the highest position; and
Figure 4 shows the part of the feed system shown in figure 2 in perspective with the perch in the highest position.

### Detailed description of the drawings

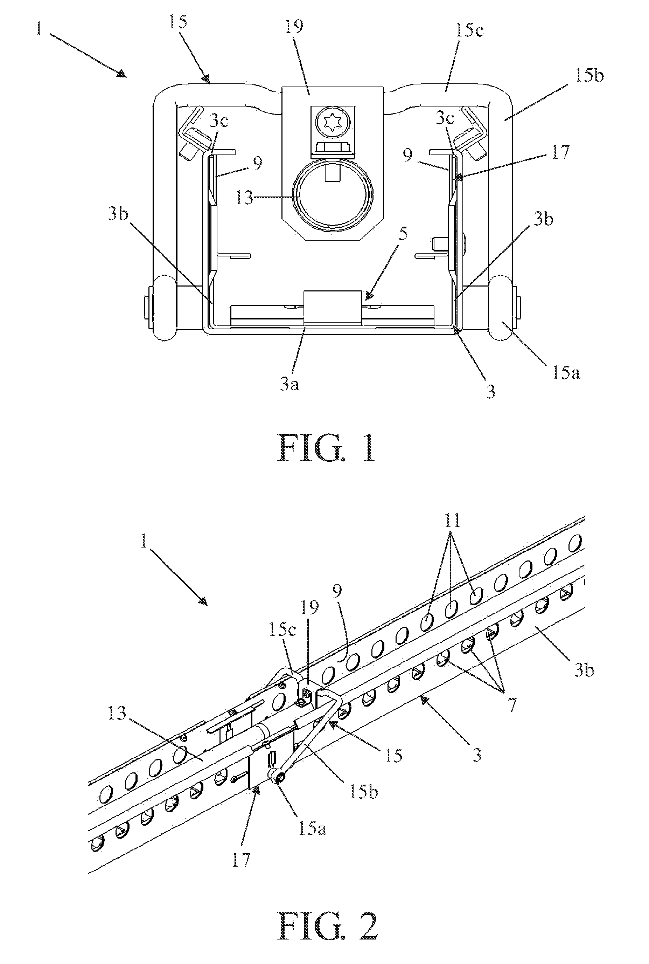

Figures 1-4 show part of an embodiment of the feed system according to the invention in transverse elevation and in perspective. The feed system 1 has a feed gutter 3 with a movable conveyor chain 5 therein for the transport of feed through the feed gutter. The feed gutter 3 has a bottom 3a and two sidewalls 3b and is open at the top. There are openings 7 in the sidewalls 3b that can be closed by slides 9, which are provided with further openings 11, and which can be slid along the sidewalls between an open position, see figure 2, in which the further openings 11 coincide with the openings 7 in the sidewalls, and a closed position, in which the further openings are found next to the openings in the sidewalls.

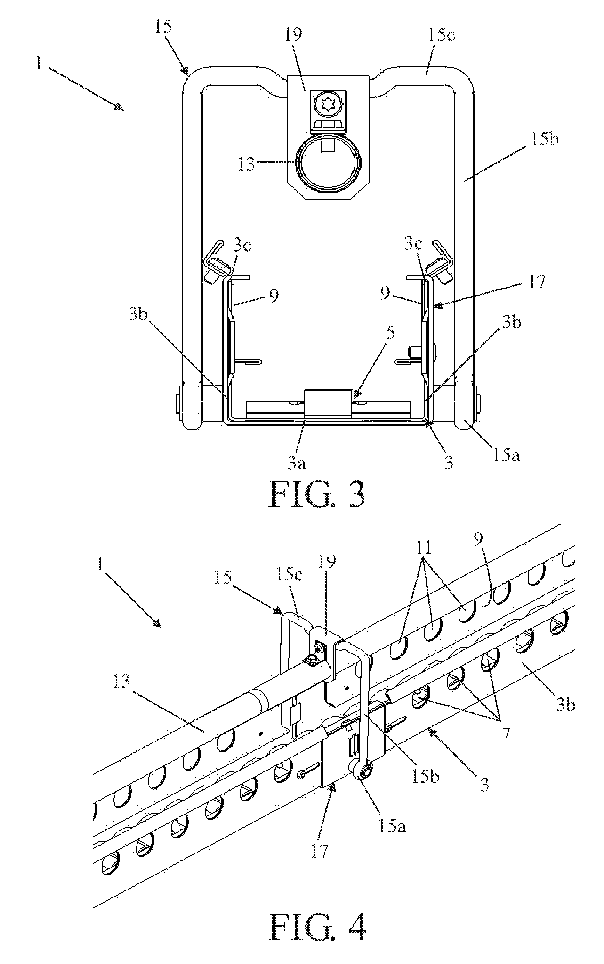

The feed system 1 also has a height adjustable perch 13, which can be moved between a lowest position, in which the perch 13 is level with the upper edge 3c of the sidewalls 3b of the feed gutter 3, see figures 1 and 3, and a highest position. in which the perch 13 is present at a distance above the upper edge 3c, see figures 2 and 4.

The perch 13 is connected to a moving device for adjusting the height of the perch. The moving device has two turnable U-shaped braces 15 at a distance from each other on which the perch is suspended. The ends 15a of the braces have a swivel connection to connecting pieces 17. These connecting pieces are connected to the ends of the feed gutter 3 and can connect two feed gutters together. There is a supporting rod 15c between the legs of the brace 15 formed by connecting rods 15b on which the perch 13 is suspended via a hinge on a suspending brace 19. The suspending brace 19 is formed by a plate, an end of which is bent into a hook with which the suspending brace hangs on one of the supporting rods, and which is provided with an opening near the other end through which the perch 13 protrudes.

The feed system 1 also has a control unit (not shown in the figures), which drives the moving device and automatically adjusts the height of the perch during the whole breeding period, so that the chickens cannot get between the sidewalls of the feed gutter and the perch and stand in the feed gutter.

Although in the above the invention is explained on the basis of the drawings, it should be noted that the invention is in no way limited to the embodiment shown in the drawings. The invention also extends to all embodiments deviating from the embodiment shown in the drawings within the context defined by the claims. The moving device can thus also be made otherwise than in the embodiment shown here, e.g. as a winch.

## Claims

1. Feed system for use in a chicken breeding run, comprising a feed gutter with a movable conveyor chain therein for the transport of feed through the feed gutter, which feed gutter has a bottom and two sidewalls and a top that is mainly open, which feed system also comprises a perch, which is present at a distance above the bottom of the feed gutter, and a moving device that is connected to the perch in order to move the perch between a lowest position that is virtually level with the upper edge of the sidewalls of the feed gutter and a highest position at a distance above the upper edge of the sidewalls, **characterised in that** there are openings in the sidewalls of the feed gutter.

2. Feed system according to claim 1, **characterised in that** the feed system also comprises further openings provided with slides, which can be slid along the sidewalls between an open position, in which the further openings coincide with the openings in the sidewalls of the feed gutter, and a closed position, in which the further openings are next to the openings in the sidewalls.

3. Feed system according to claim 1 or 2, **characterised in that** the feed system comprises a control unit that drives the moving device and adjusts the height of the perch, so that the chickens cannot get between the sidewalls of the feed gutter and the perch and stand in the feed gutter during the whole breeding period.

4. Feed system according to claim 1, 2 or 3, **characterised in that** the perch is suspended on two height adjustable supporting rods present at a distance from each other transverse to the perch and parallel to the bottom of the feed gutter, which are part of the moving device.

5. Feed system according to claim 4, **characterised in that** the supporting rods are connected to connecting rods, an end of which has a swivel connection to the feed gutter, which are part of the moving devices.

6. Feed system according to claim 5, **characterised in that** the connecting rods have a swivel connection to connecting pieces, which can be connected to the feed gutter and can connect two feed gutters together.

7. Feed system according to claim 5 or 6, **characterised in that** the connecting rods are part of U-shaped braces.

8. Feed system according to one of the preceding claims 3 to 7, **characterised in that** the perch has a hinged suspension to the supporting rods and the supporting rods are rigidly connected to the connecting rods.
